# EUROPÄISCHE PATENTSCHRIFT

(11) **EP 2 058 361 B1**
(45) Veröffentlichungstag und Bekanntmachung des Hinweises auf die Patenterteilung: **06.10.2010**
(21) Anmeldenummer: 08168432.6
(22) Anmeldetag: 06.11.2008
(51) Int. Cl.: C08J 9/224, C08J 9/232, C08L 25/04, C08J 9/14, C08J 9/12, B32B 17/06, B32B 5/18, E04B 1/76

(54) **Transluzenter Formkörper aus einem Polystyrol-Partikelschaumstoff**
Translucent form made of polystyrene particulate foam
Pièce moulée et translucide en mousse à base de particules de polystyrène

(30) Priorität: 07.11.2007 EP 07120163
(43) Veröffentlichungstag der Anmeldung: 13.05.2009
(73) Patentinhaber: BASF SE, 67056 Ludwigshafen (DE)
(72) Erfinder: Kriha, Olaf, 67063, Ludwigshafen (DE); Braun, Frank, 67063, Ludwigshafen (DE); Hahn, Klaus, 67281, Kirchheim (DE); Hofmann, Maximilian, 68167, Mannheim (DE); Longo, Daniela, 53721, Siegburg (DE); Nehls, Benjamin, 67063, Ludwigshafen (DE); Aßmann, Jens, 68165, Mannheim (DE)

(56) Entgegenhaltungen:
- EP-A- 0 612 792
- WO-A-94/29383
- WO-A-2007/057244
- DE-A1- 2 942 865
- DE-A1- 19 819 058
- DE-A1- 19 936 629
- DE-B- 1 218 373
- DE-C1- 19 541 725
- DE-C1- 19 816 460
- GB-A- 1 494 581
- US-A- 3 471 356
- US-A- 4 419 459
- US-A1- 2006 178 543

## Beschreibung

Die Erfindung betrifft einen transluzenten Formkörper aus einem Polystyrol-Partikelschaumstoff mit einer mittleren Zellzahl im Bereich von 0,1 bis 5 Zellen/mm und eine Biegefestigkeit nach EN 12089 im Bereich von 70 bis 350 kPa, Verfahren zu dessen Herstellung und Verwendung als Wand- oder Deckenplatte, für Gewächshäuser, Überdachungen oder Lagerhallen.

Polymerschaumstoffe werden üblicherweise zur Schall- oder Wärmedämmung eingesetzt. Aufgrund der Zellgrößen im Bereich von einigen µm wird Licht stark gestreut und eine Transluzenz ist mit den üblichen Polymerschaumstoffen nicht möglich. Schaumstoffe mit Zellgrößen unter 50 nm, beispielsweise auf Basis von Silica-Aerogelen, sind transluzent, ihre Herstellung ist jedoch aufwändig und teuer. Außerdem weisen sie die für den Baubereich notwendigen mechanischen Festigkeit nicht auf.

Die WO 2007/057244 beschreibt transluzente Schaumstoffplatten, welche in der Polymermatrix eingebettete Lichtleitfasern, deren Enden an unterschiedlichen Seitenflächen ein- bezw. austreten, enthalten. Das Einbetten der Lichtleitfasern in die Polymermatrix ist jedoch aufwändig und teuer.

Die DE-A 100 37 059 beschreibt ein lichtdurchlässiges Bauelement für Gebäude, das aus Hohlkammern besteht. Die Hohlkammern sind aus einem durchsichtigen Material gefertigt und mit geschäumten Polystyrolkügelchen gefüllt. Dieses Bauelement lässt ausreichend Licht durch und hat dabei einen sehr günstigen k-Wert. Die Kügelchen müssen jedoch aufwändig mithilfe eines Gebläses in die Hohlkammern verbracht werden.

Die Verwendung dünner Polystyrol-Schaumstofffolien für Beleuchtungszwecke ist beispielsweise bekannt aus DE-A 35 43 292 oder DE-A 1 218 373. Die Blasen innerhalb des Zellengefüges sind abgeflacht und liegen im wesentlichen parallel zur Extrusionsrichtung. Die Bläschen bewirken eine Brechung des einfallenden Lichtes. Dadurch ist das aus der Lichtquelle abgewandten Seite austretende Licht diffuse und entsprechend blendfrei, während gleichzeitig ein hoher Prozentsatz polarisierten Lichtes durchgelassen wird.

Aus der US 3 311 070 ist ein Zeichentisch mit einer durchscheinenden Platte bekannt. Die durchscheinende Platte besteht aus einer Glasscheibe und einem transluzenten, geschlossenzelligen Polystyrolschaumstoff. Zur Verstärkung der Diffusion wurde die Oberfläche der Schaumstoffplatte auf der Seite des einfallenden Lichtes offenzelligen ausgeführt.

Die US 3 471 356 beschreibt ein Laminat aus einer dünnen Glasscheibe und einem Schaumstoffblock als Substrat. Das Laminat zeichnet sich durch eine hohe Schlagzähigkeit, geringes Gewicht und Farbstabilität bei Licht- oder Wärmeeinwirkung aus.

Die DE-A 198 19 058 beschreibt teilchenförmige, schwach angeschäumte Styrolpolymerisate, die zu Schaumstoffpartikel mit grober Zellstruktur verschäumt werden können. In den Beispielen wird Graphit als Keimbildungsmittel zugesetzt. Daher sind die Schaumstoffe nicht transluzent.

Aufgabe der vorliegenden Erfindung war es, transluzente Schaumstoffplatten, insbesondere Wand- oder Deckenplatten bereitzustellen, die neben der für die dekorativen Anwendungen wichtigen Transluzenz auch gute Wärme- und Schalldämmeigenschaften und ausreichende mechanische Eigenschaften, insbesondere eine hohe Biegefestigkeit aufweisen.

Demgemäß wurde der oben beschriebene transluzente Formkörper aus einem Polystyrol-Partikelschaumstoff gefunden. Bevorzugt liegt die mittlere Zellzahl im Bereich von 1 bis 4 Zellen/mm. Die einzelnen Zellen weisen möglichst eine geringe Abweichung von der mittleren Zellzahl auf. Bevorzugt liegt die Standardabweichung unter 0,5 Zellen/mm.

Die Biegefestigkeit nach EN 12089 des erfindungsgemäßen transluzenten Formkörper liegt bevorzugt im Bereich von 150 bis 300 kPa,

Der transluzente Formkörper, bezogen auf 10 mm Dicke, weist im Wellenlängenbereich zwischen 400 und 800 nm bevorzugt eine Lichtdurchlässigkeit im Bereich von 10 bis 20%, insbesondere im Bereich von 12 bis 15% (Transmission) auf. Bevorzugt liegt die Dichte des transluzenten Formkörpers im Bereich von 10 bis 20 g pro Liter, insbesondere im Bereich von 12 bis 15 g pro Liter.

Der transluzente Formkörper weist in der Regel eine Wärmeleitfähigkeit λ im Bereich von 30 bis 40 mW/m*K auf.

Bevorzugt liegt der transluzente Formkörper in Form einer Platte vor. Die Dicke der Platte liegt bevorzugt im Bereich von 5 bis 25 mm, besonders bevorzugt im Bereich von 10 bis 15 mm.

Der erfindungsgemäße, transluzente Formkörper kann nach verschiedenen Verfahren durch Versintern von vorgeschäumten Polystyrolpartikeln erhalten werden. Hierzu werden expandierbare Polystyrolpartikel (EPS-Partikel) mit Heißluft oder mit Wasserdampf bei einer Temperatur im Bereich von 60 bis 100° Celsius in der Regel für 0,5 bis 50 Sekunden lang behandelt. Diese Behandlung kann z.B. in einem kontinuierlichen EPS-Vorschäumer oder EPS-Druckvorschäumer durchgeführt werden. Die zum Verschweißen verwendeten Schaumstoffpartikel weisen üblicherweise einen mittleren Durchmesser von 0,5 bis 10 mm, bevorzugt von 1 bis 6 mm auf.

Die expandierbaren Polystyrolpartikeln können durch Suspensionspolymerisation von Styrol in Gegenwart von Treibmitteln oder durch Schmelzeextrusion einer treibmittelhaltigen Polystyrolschmelze erhalten werden. Die Polystyrolmatrix weist bevorzugt ein gewichtsmittleres Molekulargewicht M_{w} im Bereich von 170.000 bis 300.000, bevorzugt im Bereich von 190.000 bis 280.000 g/mol auf. Durch Mischen mit niedermolekularen Styrolpolymeren kann der Schmelze-Volumenindex MVR 200°C/5 kg gegebenenfalls auf einen Wert im Bereich von 1 bis 10 cm³/ 10 min, vorzugsweise 2,5 bis 5 cm³/ 10 min eingestellt werden.

Als Treibmittel eigenen sich flüchtige Kohlenwasserstoffe, insbesondere aliphatische Kohlenwasserstoffe mit 3 bis 10, vorzugsweise 4 bis 6 Kohlenstoffatomen, die in Mengen von 1 bis 10, bevorzugt 2 bis 8 Gew.-%, bezogen auf Polystyrol eingesetzt werden. Besonders bevorzugt werden Butan, n-Pentan, sec.-Pentan, Isopentan oder Hexan eingesetzt. Bevorzugt wird zusätzlich zu dem aliphatischen Kohlenwasserstoff Wasser als Co-Treibmittel in Anteilen von 0,01 bis 0,1 Gew.-%, bezogen auf Polystyrol, eingesetzt.

Um eine grobe Zellstruktur zu erhalten, werden in der Regel keine nukleierend wirkende Additive, wie anorganische Pigmente oder Graphit zugegeben.

Zur besseren Verschweißbarkeit und Verbesserung der mechanischen Eigenschaften, werden die vorgeschäumten Polystyrolpartikel bevorzugt mit einer Beschichtungsmittelzusammensetzung, welche aus 20 bis 80 Gew.-% eines Tristearylesters mit einem Schmelzpunkt im Bereich von 60 bis 65°C, beispielsweise Glycerintristearat (GTS) oder Zitronensäure-tristearylester (CTS), 5 bis 30 Gew.-% eines hydrophilen oder hydrophoben Silikates oder Zinkstearat und 0 bis 60 Gew.-%, insbesondere 10 bis 50 Gew.-% eines Glycerinmonoesters einer C₁₆ bis C₁₈-Ölsäure, bevorzugt Glycerinmonostearat (GMS) besteht, beschichtet. Die Beschichtung kann weitere Antistatika und/oder Beschichtungshilfsstoffe enthalten oder-auf weiteren Beschichtungen mit anderen Beschichtungsmitteln aufgebracht werden.

Die Beschichtung der expandierbaren oder expandierten, Styrolpolymerisat-Partikel kann vor oder nach dem Verschäumen, beispielsweise durch Auftrommeln der erfindungsgemäßen Beschichtungszusammensetzung in einem Schaufelmischer (Fa. Lödige) oder durch in Kontaktbringen der Oberfläche der Styrolpolymerisatpartikel mit einer Lösung, beispielsweise durch Tauchen oder Sprühen, erfolgen. Bei der Herstellung durch Extrusion einer treibmittelhaltigen Schmelze kann die Beschichtungsmittelzusammensetzung auch dem Wasserkreislauf des Unterwassergranulators in Form einer wässrigen Lösung oder wässrigen Suspension zugegeben werden.

Bevorzugt wird ein Verfahren zur Herstellung des erfindungsgemäßen transluzenten Formkörpers eingesetzt, bei dem man
a) eine Polystyrolschmelze mit 2 bis 8 Gewichtsteilen eines flüchtigen Kohlenwasserstoffes und 0,01 bis 0,1 Gewichtsteilen Wasser als Treibmittel imprägniert und in einem Unterwassergranulator unter Druck zu expandierbarem Polystyrol (EPS) granuliert,
b) die abgetrennten EPS-Granulate mit einer Mischung, enthaltend 20 bis 80 Gew.-% Glycerintristearat, 10 bis 50 Gew.-% Glycerinmonostearat und 5 bis 30 Gew.-% Silikat, beschichtet,
c) die beschichteten EPS-Granulate auf eine Dichte im Bereich von 10 bis 20 g pro Liter vorschäumt, und
d) in einem Formteilautomaten verschweißt.

Aufgrund ihrer Transluzenz, ihren guten Wärme- und Schalldämmeigenschaften finden die erfindungsgemäßen Formkörper insbesondere Anwendung in der Bauindustrie, beispielsweise als Wand- oder Deckenplatten oder für Lagerhallen, Trennwände für Büros, Toiletten, Hallen- oder Messestände. Sie können auch in Türen- oder Fensterbereichen, Fensterläden, Dächern, Decken, Tischplatten oder Fußböden Verwendung finden. Des weiteren eignen sie sich im Kraftfahrzeugbereich für Decken- oder Fensterbereiche.

Besonders geeignet sind die erfindungsgemäßen Formkörper auch für Gewächshäuser, Überdachungen, Wintergärten oder klimatisierte Gebäude und Hallen. Hierbei verwendet man besonders bevorzugt Sandwich-Panel als Verbundstruktur mit einem Kern aus dem transluzenten erfindungsgemäßen Formkörper, vorzugsweise in Form einer Platte, die mit mindestens einer Platte aus Glas oder einem transparenten Kunststoff, beispielsweise einem transparenten Styrol-Butadien-Blockcopolymeren, Polycarbonat (PC) oder Polymethylmethacrylat (PMMA) zu einer Verbundstruktur verklebt oder verpresst werden kann. Die transparente Kunststoffplatte kann die üblichen Additive, insbesondere Antioxidantien und UV-Stabilisatoren enthalten. Die Glasplatte oder Kunststoffplatte dient insbesondere dem Schutz vor mechanischer Beschädigung der Schaumstoffschicht oder Vergilbung durch UV-Licht, in der Regel ist sie dünner als die Schaumschicht ausgebildet, beispielsweise 0,1 bis 5 mm.

### Beispiele

### Beispiel 1:

In einem 18mm Doppelwellenschneckenkneter der Fa. Leistritz wurden bei einem Durchsatz von 4,5 kg/h Polystyrol PS 158 K (BASF Aktiengesellschaft, M_{w} = 280.000 g/mol, MVR 200°C/5 kg = 3 cm³/ 10 min) und Polystyrol Empera 156 F (MVR 200°C/5 kg = 24 cm³/ 10 min) im Verhältnis 9:1 gemischt. Über eine Zahnradpumpe wurde das Gemisch durch drei statische Mischer gefördert. Vor dem 1. Mischer werden 6,5 Teile Pentan dosiert und zwischen Mischer 1 und 2 kommen 0,05 Teile VE-Wasser dazu. Der Druck wurde durch eine 2. Zahnradpumpe gehalten, die die Mischung durch einen Wärmetauscher abkühlt. Danach wurde über einen Seitenextruder eine Mischung aus pulverisiertem PS und PE-Wachs zudosiert. Nach dem Durchlauf durch weitere 2 Mischer wurde das Polymergemisch durch ein Sieb gedrückt und über eine Lochplatte mittels Unterwasserdruckgranulierung granuliert.

### Beschichtung:

In einem Schaufelmischer der F. Lödige wurden 200 ppm Antistatikum und 0,1 % Zinkstearat sowie 0,2% einer Beschichtungsmischung bestehend aus 60 % Glycerintristearat GTS, 30% Glycerinmonostearat GMS und 10% Silikat (Sipernat FK320) nacheinander beschichtet.

### Vorschäumen:

In einem diskontinuierlichen Vorschäumer der Fa. Hirsch (PREEX 1000 A23P Nennvolumen 145I) wurden 800g der beschichteten EPS-Perlen mit 0,1 bar Dampf in 50 s auf 50l vorgeschäumt. Die vorgeschäumten Schaumstoffpartikeln wiesen eine Schüttdichte von 22 g/l auf.

### Formteilherstellung

Die 24h zwischengelagerten Schaumstoffpartikel wurden auf ihre Dichte geprüft und mit einem Formteilautomaten der Fa. Erlenbach (EHV-C 520/480) mit einem bar Dampfüberdruck als Formteil verpresst und mit 20l VE-Wasser 1,5 s gekühlt und bei 0,09 bar Restdruck entformt. Die mittlere Zellzahl betrug 1,5 Zellen/mm.

Niedrigere Schaumstoffdichten wurden durch ein- oder mehrfaches Nachschäumen erhalten. Beispielsweise wurden 24 I der vorgeschäumten Schaumstoffpartikeln von Beispiel 1 in 12 s weitergeschäumt auf ein Volumen von 50L. Es wurde so eine Schüttdichte direkt nach dem Ausschäumen von 10 g/L erreicht.

Die Druckfestigkeit (Tab. 2) und Biegefestigkeit (Tab. 3) wurde nach EN 12089 ermittelt.

Die Messung der Lichtdurchlässigkeit erfolgte in Transmission an 1 cm dicken Schaumstoffplatten.

### Vergleichsversuch

Als Vergleichsversuch wurde eine 1 cm Dicke Schaumstoffplatte aus Styropor® P326 (BASF Aktiengesellschaft) mit einer Schaumstoffdichte von 15 g/l und 14 Zellen/mm verwendet.

**Tabelle 1: Transmission [%] der 1 cm dicken Schaumstoffplatten :**

| | Beispiel 1, Schaumstoffdichte 12g/l | Beispiel 1, Schaumstoffdichte 15g/l | Vergleichsversuch, Schaumstoffdichte 15g/l |
|---|---|---|---|
| Wellenlänge [nm] | | | |
| 400 | 15,1 | 11,6 | 5,7 |
| 450 | 15,7 | 12,1 | 5,9 |
| 500 | 16,2 | 12,5 | 6,1 |
| 550 | 16,5 | 12,7 | 6,2 |
| 600 | 16,9 | 13,0 | 6,3 |
| 650 | 17,2 | 13,2 | 6,4 |
| 700 | 17,5 | 13,4 | 6,4 |
| 750 | 17,9 | 13,8 | 6,5 |
| 800 | 18,2 | 14,0 | 6,6 |

**Tabelle 2**

| Dichte des Schaumstoffes [g/l] | Druckfestigkeit [kPa] |
|---|---|
| 12,6 | 35,4 |
| 11,9 | 25,8 |
| 21,1 | 114,2 |
| 20,0 | 97,7 |

**Tabelle 3**

| Dichte des Schaumstoffes [g/l] | Biegefestigkeit [kPa] |
|---|---|
| 12,0 | 101,6 |
| 11,1 | 80,6 |
| 21,3 | 271,9 |
| 26,5 | 327,4 |

## Patentansprüche

1. Transluzenter Formkörper aus einem Polystyrol-Partikelschaumstoff, **dadurch gekennzeichnet, dass** der Formkörper eine mittlere Zellzahl im Bereich von 0,1 bis 5 Zellen/mm und eine Biegefestigkeit nach EN 12089 im Bereich von 70 bis 350 kPa aufweist.

2. Transluzenter Formkörper nach Anspruch 1, **dadurch gekennzeichnet, dass** er, bezogen auf 10 mm Dicke, im Wellenlängenbereich zwischen 400 und 800 nm eine Lichtdurchlässigkeit im Bereich von 10 bis 20 % (Transmission) aufweist.

3. Transluzenter Formkörper nach Anspruch 1 oder 2, **dadurch gekennzeichnet, dass** er eine Dichte im Bereich von 10 bis 20 g/l aufweist.

4. Transluzenter Formkörper nach einem der Ansprüche 1 bis 3, **dadurch gekennzeichnet dass** er eine Wärmeleitfähigkeit λ im Bereich von 30 bis 40 mW/m*K aufweist.

5. Transluzenter Formkörper nach einem der Ansprüche 1 bis 4, **dadurch gekennzeichnet dass** er die Form einer Platte mit einer Dicke im Bereich von 5 bis 25 mm aufweist

6. Verfahren zur Herstellung eines transluzenten Formkörpers nach einem der Ansprüche 1 bis 5, **dadurch gekennzeichnet, dass** man
a) eine Polystyrolschmelze mit 2 bis 8 Gewichtsteilen eines flüchtigen Kohlenwasserstoffes und 0,01 bis 0,1 Gewichtsteilen Wasser als Treibmittel imprägniert und in einem Unterwassergranulator unter Druck zu expandierbarem Polystyrol (EPS) granuliert,
b) die abgetrennten EPS Granulate mit einer Mischung, enthaltend 20 bis 80 Gew.-% Glycerintristearat, 10 bis 50 Gew.-% Glycerinmonostearat und 5 bis 30 Gew.-% Silikat, beschichtet,
c) die beschichteten EPS-Granulate auf eine Dichte im Bereich von 10 bis 20 g pro Liter vorschäumt, und
d) in einem Formteilautomaten verschweißt.

7. Verwendung des transluzenten Formkörpers gemäß einem der Ansprüche 1 bis 5 als Wand- oder Deckenplatten, für Gewächshäuser, Überdachungen oder Lagerhallen.

8. Verbundstruktur, umfassend einen transluzenten Formkörper nach einem der Ansprüche 1 bis 5 und mindestens eine Platte aus Glas oder einem transparenten Kunststoff.

## Claims

1. A translucent molding composed of a molded polystyrene foam, wherein the average cell number of the molding is in the range from 0.1 to 5 cells per mm and its flexural strength to EN 12089 is in the range from 70 to 350 kPa.

2. The translucent molding according to claim 1, whose transmittance is in the range from 10 to 20%, based on a thickness of 10 mm, in the wavelength range from 400 to 800 nm.

3. The translucent molding according to claim 1 or 2, whose density is in the range from 10 to 20 g/l.

4. The translucent molding according to any of claims 1 to 3, whose thermal conductivity λ is in the range from 30 to 40 mW/m*K.

5. The translucent molding according to any of claims 1 to 4, which has the shape of a sheet whose thickness is in the range from 5 to 25 mm.

6. A process for the production of a translucent molding according to any of claims 1 to 5, which comprises
a) impregnating a polystyrene melt with from 2 to 8 parts by weight of a volatile hydrocarbon and from 0.01 to 0.1 part by weight of water as blowing agent and pelletizing it under pressure in an underwater pelletizer to give expandable polystyrene (EPS),
b) coating the isolated EPS pellets with a mixture comprising from 20 to 80% by weight of glycerol tristearate, from 10 to 50% by weight of glycerol monostearate, and from 5 to 30% by weight of silicate,
c) prefoaming the coated EPS pellets to a density in the range from 10 to 20 g per liter, and
d) fusing them in an automatic molding machine.

7. The use of the translucent molding according to any of claims 1 to 5 in the form of wall sheets or of ceiling sheets, or for greenhouses, or for roofing systems, or for warehouses.

8. A composite structure comprising a translucent molding according to any of claims 1 to 5 and at least one sheet composed of glass or of a transparent plastic.

## Revendications

1. Corps moulé translucide en une mousse particulaire de polystyrène, **caractérisé en ce que** le corps moulé présente un nombre de cellules moyen dans la plage allant de 0,1 à 5 cellules/mm et une résistance à la flexion selon EN 12089 dans la plage allant de 70 à 350 kPa.

2. Corps moulé translucide selon la revendication 1, **caractérisé en ce qu'**il présente une translucidité dans la plage allant de 10 à 20 % (transmission) dans le domaine de longueurs d'onde compris entre 400 et 800 nm, par rapport à une épaisseur de 10 mm.

3. Corps moulé translucide selon la revendication 1 ou 2, **caractérisé en ce qu'**il présente une densité dans la plage allant de 10 à 20 g/l.

4. Corps moulé translucide selon l'une quelconque des revendications 1 à 3, **caractérisé en ce qu'**il présente une conductivité thermique λ dans la plage allant de 30 à 40 mW/m*K.

5. Corps moulé translucide selon l'une quelconque des revendications 1 à 4, **caractérisé en ce qu'**il présente la forme d'une plaque d'une épaisseur dans la plage allant de 5 à 25 mm.

6. Procédé de fabrication d'un corps moulé translucide selon l'une quelconque des revendications 1 à 5, **caractérisé en ce que**
a) une masse fondue de polystyrène est imprégnée avec 2 à 8 parties en poids d'un hydrocarbure volatil et 0,01 à 0,1 partie en poids d'eau en tant qu'agent gonflant, et granulée dans un granulateur sous eau sous pression en polystyrène expansible (EPS),
b) les granulats d'EPS séparés sont revêtus avec un mélange contenant 20 à 80 % en poids de tristéarate de glycérine, 10 à 50 % en poids de monostéarate de glycérine et 5 à 30 % en poids de silicate,
c) les granulats d'EPS revêtus sont prémoussés à une densité dans la plage allant de 10 à 20 g par litre, et
d) soudés dans un appareil de moulage.

7. Utilisation du corps moulé translucide selon l'une quelconque des revendications 1 à 5 en tant que panneaux muraux ou de plafond, pour serres, auvents ou entrepôts.

8. Structure composite, comprenant un corps moulé translucide selon l'une quelconque des revendications 1 à 5 et au moins une plaque en verre ou en plastique transparent.
